# EUROPÄISCHE PATENTSCHRIFT

(11) **EP 3 183 446 B1**
(45) Veröffentlichungstag und Bekanntmachung des Hinweises auf die Patenterteilung: **18.12.2019**
(21) Anmeldenummer: 15757455.9
(22) Anmeldetag: 14.08.2015
(51) Int. Cl.: F02B 37/00, F02B 39/16, F02B 63/06, F04D 25/16, F02D 29/04, F02B 37/12, F02B 37/16, F04D 25/02

(54) **KOMPRESSOREINHEIT UND VERFAHREN ZU DEREN BETRIEB**
COMPRESSOR UNIT AND METHOD FOR OPERATING THE SAME
UNITÉ DE COMPRESSEUR ET SON PROCÉDÉ DE FONCTIONNEMENT

(30) Priorität: 19.08.2014 DE 102014111835
(43) Veröffentlichungstag der Anmeldung: 28.06.2017
(73) Patentinhaber: Gardner Denver Deutschland GmbH, 97616 Bad Neustadt (DE)
(72) Erfinder: DENNER, Andreas, 56291 Kisselbach (DE)
(74) Vertreter: Engel, Christoph Klaus
(86) Internationale Anmeldenummer: PCT/EP2015/068754
(87) Internationale Veröffentlichungsnummer: WO 2016/026781

(56) Entgegenhaltungen:
- DE-A1-102004 051 486
- JP-A- 2005 083 275
- US-A- 5 385 449
- US-A1- 2011 154 892
- US-B2- 6 726 457
- Originalbetriebsanleitung Id.Nr.100 013 402 / 02

## Beschreibung

Die vorliegende Erfindung betrifft zunächst ein Verfahren zum Steuern des Betriebs einer mit einem Verbrennungsmotor angetriebenen Kompressoreinheit zum Verdichten oder Komprimieren von Luft oder Gas. Das Verfahren ist insbesondere zur Behandlung eines Fehlerfalles ausgebildet. Die Erfindung betrifft weiterhin eine Kompressoreinheit, welcher zur Ausführung des erfindungsgemäßen Verfahrens geeignet ist.

Die DE 40 32 451 A1 lehrt eine Einrichtung zur Ladedruckregelung einer Brennkraftmaschine. Die Einrichtung umfasst einen Ladedrucksensor auf der Hochdruckseite.

Aus der WO 00/32916 A1 ist eine Einrichtung zur Erzeugung von Pressluft mit mindestens zwei turbinengetriebenen Kompressoreinheiten bekannt.

Die US 4,496,291 zeigt ein Turboladersystem für einen Verbrennungsmotor mit mehreren in Reihe geschalteten Turbinenkomponenten.

Die GB 1 441 498 beschreibt einen Kompressor, welcher mit einem Turbolader ausgestattet ist.

Aus der DE 10 2012 019 896 A1 ist eine Brennkraftmaschine mit zwei Turboladern und mit einem Regler zum Regeln des ersten und/oder zweiten Turboladers bekannt.

Die DE 10 2008 061 399 A1 zeigt eine Brennkraftmaschine mit zwei in Reihe geschalteten Abgasturboladern. Die Abgasturbolader umfassen jeweils eine Abgasturbine in einer Abgasleitung und einen Verdichter in einem Ansaugtrakt.

Die DE 199 60 152 A1 lehrt eine Verdichteranlage zur Erzeugung von Druckluft, bei welcher ein Verdichter durch eine Brennkraftmaschine angetrieben wird. An der Abgasseite der Brennkraftmaschine ist ein erster Abgasturbolader angeordnet, welcher der Brennkraftmaschine vorverdichtete Luft zuführt. An der Abgasseite der Brennkraftmaschine ist weiterhin ein zweiter Abgasturbolader angeordnet, welcher einem flüssigkeitseingespritzten Verdrängerverdichter vorverdichtete Luft zuführt. Der erste Abgasturbolader und der zweite Abgasturbolader sind in Reihe angeordnet.

Die US 2011/0154892 A1 beschreibt eine Verbrennungsmaschine mit einem ersten Lader, einem zweiten Lader, einem ersten Steuerventil zur Steuerung der Lieferung von Abgas zum ersten Lader, und mit einem zweiten Steuerventil zur Steuerung der Zufuhr von Luft zum ersten Lader. Weiterhin wird ein Gerät zur Ermittlung einer Anomalie eines Steuerventils beschrieben, wobei dieses Gerät einen Aufladedrucksensor umfasst, um den Druck der Ladeluft zu bestimmen.

Die DE 10 2004 051 486 A1 beschreibt ein Verfahren zum Betreiben einer Mehrzylinder-Brennkraftmaschine mit zwei jeweils aus einer Turbine und einem Verdichter bestehenden Abgasturboladern. Der zweite Abgasturbolader wird wenigstens zeitweise zusätzlich zum ersten Abgasturbolader betrieben und wird abgeschaltet, wenn der Beitrag seines Verdichters zum Ladedruck unter eine vorgegebene Grenze fällt.

Die JP 2005-83275 A beschreibt ein Verfahren zur Steuerung eines Verbrennungsmotors. Der Verbrennungsmotor umfasst zwei Turbolader zum Laden von Verbrennungsräumen mit Luft. Es ist beispielhaft ein Verbrennungsmotor in Form eines 6-Zylinder-V-Motors gezeigt, welcher mit Benzin als Kraftstoff betrieben wird. In den Verbrennungsräumen wird ein Gemisch aus Benzin und Luft verbrannt, wodurch sich Kolben hin- und herbewegen. Jeder Zylinderkopf des Verbrennungsmotors weist ein Einspritzventil auf, welches über eine Kraftstoffpumpe mit einem Kraftstofftank verbunden ist. Jeder Zylinderkopf umfasst ein Paar Einlassventile und ein Paar Auslassventile. Jeweils einer der beiden Turbolader ist für eine von zwei Zylinderbänken des Verbrennungsmotors vorgesehen. Jeder Turbolader umfasst ein Verdichterrad und ein Turbinenlaufrad. Ein Luft/Kraftstoff-Verhältnis-Sensor ist im Abgassystem des Verbrennungsmotors angeordnet. Ein Sauerstoffsensor ist in der Nähe des Auslasses angeordnet. Die Sensoren sind mit einem Eingang eines Steuergerätes verbunden.

Die US 6,726,457 B2 zeigt eine Verdichteranlage zur Erzeugung von Druckluft, bei welcher ein Verdichter durch eine Brennkraftmaschine angetrieben wird. An der Abgasseite der Brennkraftmaschine ist ein erster Abgasturbolader angeordnet, welcher der Brennkraftmaschine vorverdichtete Luft zuführt. An der Abgasseite der Brennkraftmaschine ist weiterhin ein zweiter Abgasturbolader angeordnet, welcher einem flüssigkeitseingespritzten Verdrängerverdichter vorverdichtete Luft zuführt. Der erste Abgasturbolader und der zweite Abgasturbolader sind in Reihe angeordnet. Ein pneumatisches Ventil dient zum Abblasen von komprimierter Luft.

Die Originalbetriebsanleitung "Cummins QSB6.7 Powered Compressor" von CompAir, Januar 2010 zeigt einen Funktionsplan eines Kompressors. Der Kompressor umfasst zwei in Reihe geschaltete Turbolader im Abgasstrom eines Dieselmotors. Der Kompressor umfasst weiterhin eine Abblasevorrichtung, die über einen elektronischen Proportionalregler gesteuert wird. Die Maschine wird automatisch abgeschaltet bzw. in der Motordrehzahl beispielsweise dann gesenkt, wenn die Drucksensoren Werte außerhalb eines zulässigen Wertebereichs liefern. Ein Drucksensor dient zur Überwachung des Druckes des elektronischen Proportionalreglers.

Die Aufgabe der vorliegenden Erfindung besteht darin, bei einer mit einem Verbrennungsmotor und mit zwei Turboladern ausgestatteten Kompressoreinheit Beschädigungen am zweiten Turbolader infolge eines Fehlers in der Kompressoreinheit zu verhindern.

Die genannte Aufgabe wird gelöst durch ein Verfahren gemäß dem beigefügten Anspruch 1 sowie durch eine Kompressoreinheit gemäß dem beigefügten nebengeordneten Anspruch 11.

Das erfindungsgemäße Verfahren dient zum Betrieb bzw. zur Steuerung des Betriebs einer mit einem Verbrennungsmotor angetriebenen Kompressoreinheit (nachfolgend auch kurz Kompressor genannt) zum Komprimieren von Luft oder Gas. Dabei soll das Verfahren insbesondere einen möglichen Fehlerfall behandeln, um Schäden am Kompressor zu verhindern. Der Kompressor dient zum Komprimieren von Luft, um diese als Druckluft bereitzustellen. Da der Kompressor durch einen Verbrennungsmotor angetrieben wird, ist er bevorzugt als mobile Einheit ausgebildet.

In einem Abgasstromweg (nachfolgend auch kurz Abgasstrom genannt) des Verbrennungsmotors ist mindestens ein erster Turbolader zur Zuführung von verdichteter (zunächst also vorverdichteter) Luft zum Verbrennungsmotor angeordnet. Es handelt sich bei dem Turbolader somit um einen Abgasturbolader. Die (vor)verdichtete Luft wird in einen Verbrennungsraum des Verbrennungsmotors geführt. Der erste Turbolader dient der Leistungs- bzw. Effizienzsteigerung des Verbrennungsmotors.

In dem Abgasstrom des Verbrennungsmotors ist weiterhin mindestens ein zweiter Turbolader zur Verdichtung (zunächst also Vorverdichtung) der vom Kompressor zu komprimierenden Luft angeordnet. Der zweite Turbolader ist somit ebenfalls ein Abgasturbolader, wobei die vom zweiten Turbolader (vor)verdichtete Luft nicht dem Verbrennungsmotor zugeführt wird, sondern nach mindestens einem weiteren Verdichtungsvorgang als komprimierte Luft in Form von Druckluft ausgegeben wird. Hierfür ist dem zweiten Turbolader bevorzugt ein Hauptverdichter nachgeschaltet.

Der erste Turbolader und der zweite Turbolader sind im Abgasstromweg bevorzugt in Reihe geschaltet.

Das erfindungsgemäße Verfahren umfasst zunächst einen Schritt, bei welchem ein Überwachen eines vom ersten Turbolader erzeugten Druckes der vorverdichteten Luft während eines Betriebszustandes des Kompressors erfolgt. Es wird somit ein Ist-Druck der vorverdichteten Luft überwacht, welche in den Verbrennungsraum des Verbrennungsmotors strömt, wobei Messwerte des vom ersten Turbolader erzeugten Druckes Überwachungsdaten darstellen und bevorzugt eine Ist-Charakteristik bilden. Entsprechend ist bevorzugt auch eine Soll-Charakteristik vordefiniert. Es werden bevorzugt die standardmäßigen Überwachungsdaten des ersten Turboladers, welche zumindest die Messwerte des vom ersten Turbolader erzeugten Druckes umfassen, an ein übergeordnetes Kompressorleitsystem übermittelt. Diese Übermittlung erfolgt bevorzugt während aller Betriebszustände des nachgeschalteten Hauptverdichters. Bevorzugt wird der Druck unmittelbar vor dem Einströmen der vorverdichteten Luft in den Verbrennungsraum gemessen. In dem Betriebszustand des Kompressors erzeugt der Kompressor die komprimierte Luft in Form von Druckluft, sodass der Verbrennungsmotor nicht lediglich im Leerlauf läuft.

In einem weiteren Schritt des erfindungsgemäßen Verfahrens erfolgt ein Ändern oder Beenden des Betriebszustandes, sobald der überwachte Druck unter einen vorab festgelegten Wert fällt. Hierfür erfolgt bevorzugt ein Vergleich der Ist-Charakteristik mit der Soll-Charakteristik, der bevorzugt im übergeordneten Kompressorleitsystem durchgeführt wird. Bei diesem Vergleich wird festgestellt, ob die Ist-Charakteristik von der Soll-Charakteristik über den gesamten Betriebsbereich oder in einzelnen, zuvor spezifizierten Betriebspunkten für eine Mindestzeitdauer um mehr als einen vordefinierten Wert abweicht. Das Ändern des Betriebszustandes führt bevorzugt dazu, dass die beiden Turbolader keine oder nur noch eine unwesentliche Verdichtung der Luft vornehmen. Das Ändern oder Beenden des Betriebszustandes führt bevorzugt zu einem Bereitschaftszustand, in welchem sich der Verbrennungsmotor beispielsweise im Leerlauf befindet.

Ein besonderer Vorteil des erfindungsgemäßen Verfahrens besteht darin, dass durch eine einfache Überwachung des vom ersten Turbolader erzeugten Druckes eine Überwachung der korrekten Funktion der dem zweiten Turbolader nachgeschalteten Komponenten erfolgen kann, um Schäden am zweiten Turbolader zu verhindern. Die vorliegende Erfindung basiert auf der überraschenden Erkenntnis, dass eine Überlastung des zweiten Turboladers auch am ersten Turbolader festgestellt werden kann, wo die Bestimmung des Druckes aufwandsarm und problemlos möglich ist, wohingegen die Druckbestimmung am zweiten Turbolader aufgrund von nötigen Anpassungen an unterschiedliche Umgebungsbedingungen problematisch ist.

Der zweite Turbolader weist bevorzugt keinen Messsensor für eine Überwachung eines zulässigen Betriebsbereiches auf und wird dadurch systemmäßig zur Diagnostik und Überwachung passiv durch den ersten Turbolader gesteuert, da eine strömungstechnisch erkannte Abhängigkeit im gemeinsamen Abgasstromweg genutzt wird. Somit erfolgt bevorzugt keine Messung eines vom zweiten Turbolader erzeugten Druckes oder einer anderen Betriebsgröße des zweiten Turboladers.

Der am ersten Turbolader überwachte Druck fällt dann unter den vorab festgelegten Wert, wenn ein vom zweiten Turbolader mit der vorverdichteten Luft beaufschlagtes Volumen infolge eines Fehler geschlossen ist, was zur Überlastung des zweiten Turboladers führt. In diesem Fehlerfall fördert der zweite Turbolader gegen ein geschlossenes System. Insofern der Fehlerfall andauern würde, so würde der zweite Turbolader seine Pumpgrenze erreichen. Durch das Pumpen würden erhebliche Druckpulsationen und Schwingungen entstehen. Die Temperatur des zweiten Turboladers würde erheblich steigen und letztlich käme es zu Beschädigungen des zweiten Turboladers. Erfindungsgemäß kann der Fehlerfall jedoch nicht andauern, da der Betriebszustand des Kompressors beendet wird, sodass auch die Vorverdichtung der Luft durch den ersten Turbolader und durch den zweiten Turbolader zumindest weitestgehend endet und der Druck in dem vom zweiten Turbolader mit der vorverdichteten Luft beaufschlagten Volumen sinkt. Der genannte Fehlerfall tritt insbesondere dann auf, wenn eine Abblasevorrichtung zum Entleeren des Volumens infolge eines Fehlers nicht öffnet.

Die vom zweiten Turbolader vorverdichtete Luft wird im Betriebszustand zu dem Hauptverdichter geleitet, welcher die vorverdichtete Luft komprimiert, sodass diese als Druckluft ausgegeben werden kann. Der Hauptverdichter wird vom Verbrennungsmotor angetrieben und ist bevorzugt durch einen Schraubenkompressor gebildet.

Der Schritt des Beendens des Betriebszustandes, sobald der überwachte Druck unter einen vorab festgelegten Wert fällt, umfasst auch ein Schließen einer Zuführung von Ansaugluft zu dem Hauptverdichter, sodass der Hauptverdichter ohne Last ist.

Die vom zweiten Turbolader vorverdichtete Luft wird im Betriebszustand bevorzugt über einen Ansaugregler zu dem Hauptverdichter geleitet. Im Betriebszustand ist der Ansaugregler geöffnet, sodass die vorverdichtete Luft zum Hauptverdichter strömen kann. In anderen Zuständen ist der Ansaugregler geschlossen, sodass keine Ansaugluft zum Hauptverdichter strömen kann und der Hauptverdichter ohne Last ist. Der Schritt des Beendens des Betriebszustandes, sobald der überwachte Druck unter einen vorab festgelegten Wert fällt, umfasst bevorzugt auch ein Ansteuern des Ansaugreglers zum Schließen des Ansaugreglers. Wenngleich der Ansaugregler aufgrund des Fehlerfalles ggf. bereits geschlossen ist, wird durch das Ansteuern des Ansaugreglers zum Schließen des Ansaugreglers abgesichert, dass der Ansaugregler geschlossen ist und der Hauptverdichter ohne Last ist.

Die Inbetriebnahme des Kompressors zum Erreichen des Betriebszustandes beginnt bevorzugt mit einer Phase des Hochfahrens. Während des Hochfahrens wird der Verbrennungsmotor vom Stillstand bis zu einer Niedrigdrehzahl beschleunigt. Die Niedrigdrehzahl stellt eine Schondrehzahl dar und ist deutlich geringer als eine Betriebsdrehzahl des Verbrennungsmotors. Die Niedrigdrehzahl ist mindestens so groß wie eine Leerlaufdrehzahl. Während des Hochfahrens ist der Ansaugregler geöffnet.

Der Übergang vom Vorgang des Hochfahrens in den Betriebszustand erfolgt bevorzugt nicht unmittelbar, sondern über eine Warmlaufphase. Während der Warmlaufphase läuft der Verbrennungsmotor weiterhin mit der Niedrigdrehzahl. Der Ansaugregler wird geschlossen. Damit das vom zweiten Turbolader mit vorverdichteter Luft beaufschlagte Volumen durch Schließen des Ansaugreglers nicht vollständig geschlossen ist, wird eine Druckabbau- oder Abblasevorrichtung geöffnet, sodass Luft aus diesem Volumen über die Abblasevorrichtung entweichen kann.

Beim Übergang von der Warmlaufphase in den Betriebszustand wird der Verbrennungsmotor auf die Betriebsdrehzahl beschleunigt, während die Abblasevorrichtung geschlossen und der Ansaugregler geöffnet wird.

Der oben genannte Fehlerfall ist insbesondere dann gegeben, wenn die Abblasevorrichtung nicht ordnungsgemäß öffnet, während der Ansaugregler geschlossen bleibt. Das Verharren der Abblasevorrichtung im geschlossenen Zustand kann insbesondere dann auftreten, wenn eine die Abblasevorrichtung steuernde Steuerleitung blockiert ist; beispielsweise wenn diese Steuerleitung eingefroren ist.

Der vorab festgelegte Wert des vom ersten Turbolader erzeugten Druckes, dessen Unterschreitung zum Beenden des Betriebszustandes führt, ist bevorzugt abhängig von einer Drehzahl des Verbrennungsmotors. Es ist somit eine vorab festgelegte Funktion des Druckes von der Drehzahl gegeben, beispielsweise in Form einer Kennlinie. Es ist somit nicht lediglich ein einziger Wert, sondern eine Reihe von Werten vorab festgelegt. Entsprechend wird während des Betriebszustandes die Drehzahl des Verbrennungsmotors permanent oder zumindest regelmäßig gemessen, um für die gemessene Drehzahl den jeweils vorab festgelegten Wert auswählen zu können und um diesen mit dem aktuell gemessenen Wert des vom ersten Turbolader erzeugten Druckes der vorverdichteten Luft vergleichen zu können.

Die vorab festgelegte Funktion des Druckes von der Drehzahl ist bevorzugt steigend, sodass der vorab festgelegte Wert mit der Drehzahl steigt.

Das Beenden bzw. Ändern des Betriebszustandes umfasst bevorzugt ein Absenken der Drehzahl des Verbrennungsmotors von der Betriebsdrehzahl auf eine Leerlaufdrehzahl des Verbrennungsmotors. Die Leerlaufdrehzahl des Verbrennungsmotors ist deutlich kleiner als die Betriebsdrehzahl des Verbrennungsmotors. Die Leerlaufdrehzahl des Verbrennungsmotors beträgt bevorzugt nur ein Bruchteil der Betriebsdrehzahl des Verbrennungsmotors.

Das Beenden bzw. Ändern des Betriebszustandes umfasst bevorzugt zunächst das Absenken der Drehzahl des Verbrennungsmotors von der Betriebsdrehzahl auf die Leerlaufdrehzahl des Verbrennungsmotors und anschließend ein Abschalten des Verbrennungsmotors, wodurch dieser schließlich zum Stillstand kommt.

Das Beenden bzw. Ändern des Betriebszustandes umfasst bevorzugt weiterhin ein Abspeichern des aufgetretenen Fehlers in einem Fehlerspeicher und/oder ein Melden des Fehlers an einen Benutzer.

Das Ansteuern der Abblasevorrichtung erfolgt bevorzugt pneumatisch über einen Druckregler. Der Druckregler ist beispielsweise durch einen elektronischen Proportionalregler gebildet. Der Druckregler wird bevorzugt von der mit dem Hauptverdichter erzeugten Druckluft beaufschlagt, deren Druck durch ggf. entnommene Druckluft gemindert ist. Bevorzugt wird auch der Ansaugregler über den Druckregler gesteuert. Der vom Druckregler bewirkte Steuerdruck wird bevorzugt überwacht. Steigt der Steuerdruck im Betriebszustand über einen vorab festgelegten Maximalwert, so erfolgt bevorzugt ein Beenden des Betriebszustandes. Dieses Beenden des Betriebszustandes erfolgt bevorzugt in gleicher Weise wie das Beenden des Betriebszustandes, sobald der überwachte vom ersten Turbolader erzeugte Druck der vorverdichteten Luft unter den vorab festgelegten Wert fällt.

Bei bevorzugten Ausführungsformen des erfindungsgemäßen Verfahrens durchströmt der Abgasstrom des Verbrennungsmotors zunächst den ersten Turbolader und anschließend den zweiten Turbolader. Somit ist eine Reihenschaltung der beiden Turbolader ausgebildet.

Der Verbrennungsmotor ist bevorzugt durch einen Dieselmotor gebildet.

Der erfindungsgemäße Kompressor dient zum Komprimieren von Luft, welche als Druckluft bereitgestellt wird. Der Kompressor weist einen Verbrennungsmotor zum Antrieb des Kompressors auf. Der Kompressor umfasst weiterhin einen in einem Abgasstrom des Verbrennungsmotors angeordneten ersten Turbolader zur Zuführung von vorverdichteter Luft zum Verbrennungsmotor, welche in einen Verbrennungsraum des Verbrennungsmotors strömt. Der Kompressor umfasst weiterhin einen im Abgasstrom des Verbrennungsmotors angeordneten zweiten Turbolader zur Vorverdichtung der zu komprimierenden Luft. Eine weitere Komponente des Kompressors bildet eine Ansteuereinheit zum Ansteuern des Kompressors. Diese Ansteuereinheit ist zur Ausführung des erfindungsgemäßen Verfahrens konfiguriert. Bevorzugt ist die Ansteuereinheit zur Ausführung bevorzugter Ausführungsformen des erfindungsgemäßen Verfahrens konfiguriert. Im Übrigen weist der erfindungsgemäße Kompressor bevorzugt auch solche Merkmale auf, die im Zusammenhang mit dem erfindungsgemäßen Verfahren angegeben sind.

Weitere Vorteile, Einzelheiten und Weiterbildungen der Erfindung ergeben sich aus der nachfolgenden Beschreibung einer bevorzugten Ausführungsform der Erfindung, unter Bezugnahme auf die Zeichnung. Es zeigen:
- Fig. 1:: einen pneumatischen Schaltplan einer bevorzugten Ausführungsform eines erfindungsgemäßen Kompressors; und
- Fig. 2:: ein Diagramm zur Darstellung der Abhängigkeit eines minimalen Druckes von einer Drehzahl.

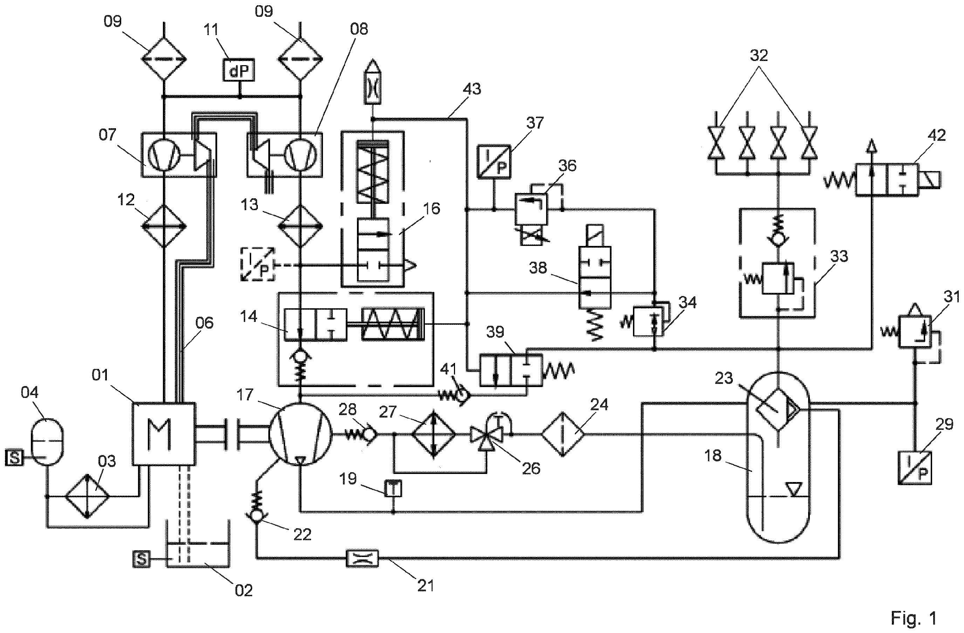

Fig. 1 zeigt einen pneumatischen Schaltplan einer bevorzugten Ausführungsform eines erfindungsgemäßen Kompressors. Der Kompressor umfasst einen Dieselmotor 01, welcher als Antrieb des Kompressors fungiert. Der Dieselmotor wird mit Diesel aus einem Dieseltank 02 betrieben. Der Dieselmotor wird mit einem Wasserkühler 03 gekühlt. Der Wasserkühler 03 ist an einen Ausgleichbehälter 04 angeschlossen.

Ein Abgasstrom 06 des Dieselmotors 01 wird zuerst über einen ersten Turbolader 07 und anschließend über einen zweiten Turbolader 08 geleitet. Die Turbolader 07, 08 beziehen Luft über zwei Luftfilter 09, zwischen denen ein Differenzdruckschalter 11 angeordnet ist. Die vom ersten Turbolader 07 vorverdichtete Luft wird mit einem ersten Luftkühler 12 abgekühlt, woraufhin der Dieselmotor 01 mit der vorverdichteten abgekühlten Luft geladen wird.

Die vom zweiten Turbolader 08 vorverdichtete Luft wird mit einem zweiten Luftkühler 13 abgekühlt und strömt anschließend zu einem Ansaugregler 14 und zu einer Abblasevorrichtung 16, wobei im Regelfall nur eine der beiden Komponenten geöffnet ist. Ist der Ansaugregler 14 geöffnet, so strömt die vorverdichtete abgekühlte Luft zu einem Schraubenkompressor 17, der vom Dieselmotor 01 angetrieben wird und zur Kompression der vorverdichteten Luft dient, d. h. zur Erzeugung der bereitzustellenden Druckluft. Ist der Ansaugregler 14 geschlossen, so strömt die vorverdichtete abgekühlte Luft über die geöffnete Abblasevorrichtung 16 nach außen, sodass sie entweicht. Hierdurch wird verhindert, dass der zweite Turbolader 08 gegen ein geschlossenes Volumen fördert, wodurch er beschädigt werden kann.

Die vom Schraubenkompressor 17 erzeugte Druckluft strömt in einen Druckbehälter 18, wobei deren Temperatur mit einem Temperatursensor 19 überwacht wird. Öl, welches sich im Druckbehälter 18 befindet, strömt über einen Ölfilter 24 und über einen Öltemperaturregler 26 mit einem Ölkühler 27 sowie über ein Rückschlagventil 28 zum Schraubenkompressor 17, um diesen mit Öl zu versorgen.

Im Druckbehälter 18 befindet sich ein Feinabscheider 23. Vom Feinabscheider 23 abgeschiedenes Öl wird über eine Absaugleitung 21 und über ein Rückschlagventil 22 dem Schraubenkompressor 17 wieder zugeführt.

Der Druck im Druckbehälter 18 wird mit einem Drucksensor 29 überwacht und kann bei Übersteigen eines zulässigen Druckes mit einem Sicherheitsventil 31 gemindert werden.

Die Druckluft im Druckbehälter 18 kann an Entnahmehähnen 32 für die gewünschte Anwendung entnommen werden. Wenn die Entnahmehähne 32 vollständig geöffnet sind, so wird mit einem Druckhalteventil 33 gewährleistet, dass ein Restdruck im Druckbehälter 18 gehalten wird, um sicherzustellen, dass der Schraubenkompressor 17 stets mit genügend Öl versorgt wird. Die Druckluft im Druckbehälter 18 wird zudem über einen Druckbegrenzer 34 an einen elektronischen Proportionalregler 36 geleitet. Der vom elektronischen Proportionalregler 36 geregelte Druck der Druckluft ist mit einem Drucksensor 37 messbar. Die vom elektronischen Proportionalregler 36 geregelte Druckluft dient zur Ansteuerung des Ansaugreglers 14 und der Abblasevorrichtung 16.

Hinter dem Druckbegrenzer 34 ist zudem ein Schnellschlussventil 38 angeordnet. Im Leerlauf, d. h. wenn an den Entnahmehähnen 32 keine Druckluft entnommen wird, der Ansaugregler 14 geschlossen ist und sich der Dieselmotor 01 mit einer Leerlaufdrehzahl dreht, wird dem Schraubenkompressor 17 etwas Luft über ein Bypassventil 39 und über ein Rückschlagventil 41 zugeführt, um den Schraubenkompressor 17 im Leerlauf zu schonen. Die am Druckbegrenzer 34 anliegende Druckluft kann auch an einem Entlastungsventil 42 abgelassen werden.

Zur Inbetriebnahme des Kompressors wird der Dieselmotor 01 ausgehend vom Stillstand auf eine Schondrehzahl beschleunigt, die der Leerlaufdrehzahl entspricht. Der Ansaugregler 14 bleibt zunächst offen, bis ein Betriebsdruck von etwa 1,5 Überdruck aufgebaut ist. Danach wird durch eine Ansteuerung des Proportionalreglers 36 der Ansaugregler 14 geschlossen und es beginnt eine Warmlaufphase, in welcher der Dieselmotor 01 weiterhin mit der Schondrehzahl betrieben wird. In dieser Phase sind der Proportionalregler 36 und das Schnellschlussventil 38 geöffnet. Somit steht auch ein Steuerdruck an der Abblasevorrichtung 16 an, sodass diese öffnet. Hierdurch kann die vom zweiten Turbolader 08 geförderte Luft nach außen entweichen. Nach der Warmlaufphase wird in den Betriebszustand übergegangen. Im Betriebszustand wird an den Entnahmehähnen 32 Druckluft entnommen. Durch Ansteuern mit dem Proportionalregler 36 wird der Ansaugregler 14 geöffnet, während die Abblasevorrichtung 16 geschlossen wird. Sobald an den Entnahmehähnen 32 keine Druckluft mehr entnommen wird, so wird der Ansaugregler 14 durch Ansteuern mit dem Proportionalregler 36 geschlossen, während die Abblasevorrichtung 16 geöffnet wird und der Dieselmotor 01 auf seine Leerlaufdrehzahl gebracht wird.

In einem Fehlerfall kann eine vom Proportionalregler 36 zur Abblasevorrichtung 16 geführte Steuerleitung 43 blockiert sein; beispielsweise wenn diese eingefroren ist. In diesem Fehlerfall öffnet die Abblasevorrichtung 16 nicht, während der Ansaugregler 14 geschlossen bleibt. Folglich beaufschlagt der zweite Turbolader 08 ein geschlossenes Volumen mit vorverdichteter Luft. Im Betriebszustand läuft der Dieselmotor 01 mit der Betriebsdrehzahl. Der zweite Turbolader 08 erreicht seine Pumpgrenze, wodurch er überlastet wird, was zu Beschädigungen des zweiten Turboladers 08 führt.

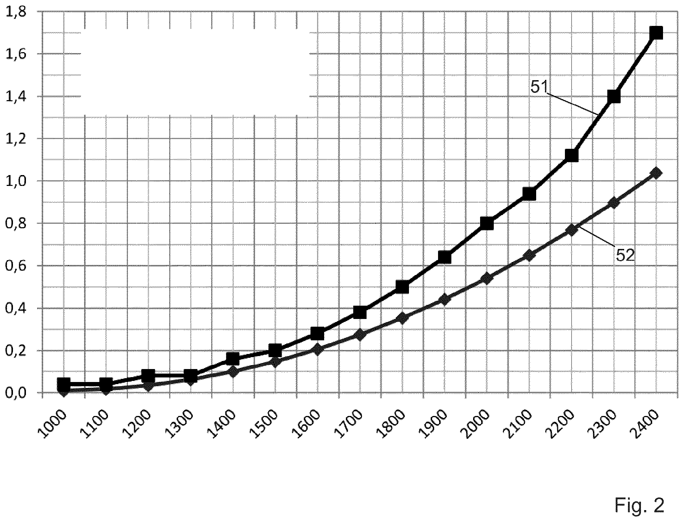

Erfindungsgemäß wird der vom ersten Turbolader 07 erzeugte Ist-Druck überwacht. Hierzu dient ein Drucksensor (nicht gezeigt) unmittelbar am Dieselmotor 01. Fällt dieser Druck unter einen vorab festgelegten von der Drehzahl des Dieselmotors 01 abhängigen Wert (vgl. Fig. 2), so kann erfindungsgemäß der oben beschriebene Fehlerfall erkannt werden. In diesem Fall wird der Dieselmotor 01 zunächst auf seine Leerlaufdrehzahl gebracht. Hierdurch sinkt die Belastung des zweiten Turboladers 08 weitestgehend, sodass eine Beschädigung des zweiten Turboladers 08 verhindert ist. Gleichzeitig wird der Ansaugregler 14 zum Schließen angesteuert, um sicherzustellen, dass er tatsächlich geschlossen ist. Hierdurch wird gewährleistet, dass der Schraubenkompressor 17 keine Luft mehr ansaugt, d. h. ohne Last ist, sodass der Dieselmotor 01 mit seiner Leerlaufdrehzahl laufen kann. Nachdem der Dieselmotor 01 mit seiner Leerlaufdrehzahl gelaufen ist, wird er abgeschaltet, sodass er zum Stillstand kommt. Der erkannte Fehlerfall wird in einem Fehlerspeicher gespeichert.

Ergänzend wird der mit dem Drucksensor 37 gemessene Druck überwacht. Übersteigt dieser Druck einen vorab festgelegten Maximalwert, so führt dies ebenfalls zu dem oben beschriebenen Ablauf zur Beendigung des Betriebes des Kompressors.

Fig. 2 zeigt ein Diagramm zur Darstellung der Abhängigkeit des für den vom ersten Turbolader 07 (gezeigt in Fig. 1) erzeugten Druck vorab festgelegten minimalen Wertes von der Drehzahl des Dieselmotors 01 (gezeigt in Fig. 1). Die Y-Achse gibt den Druck in bar Überdruck an. Die X-Achse gibt die Drehzahl des Dieselmotors 01 in Umdrehungen pro Minute an.

Eine erste Kennlinie 51 gibt den vom ersten Turbolader 07 erzeugten Druck in Abhängigkeit von der Drehzahl des Dieselmotors 01 an, wenn der Kompressor ordnungsgemäß arbeitet und kein Fehler vorliegt.

Eine zweite Kennlinie 52 gibt den vorab festgelegten minimalen Wert für den vom ersten Turbolader 07 erzeugten Druck in Abhängigkeit von der Drehzahl des Dieselmotors 01 an, welcher erfindungsgemäß als Kriterium zum Feststellen des Fehlerfalles dient. Der vorab festgelegte minimale Wert des vom ersten Turbolader 07 erzeugten Druckes kann auch durch eine mathematische Funktion oder in anderer Weise qualitativ und/oder quantitativ festgelegt sein.

### Bezugszeichenliste

- 01: Dieselmotor
- 02: Dieseltank
- 03: Wasserkühler
- 04: Ausgleichbehälter
- 05: -
- 06: Abgasstrom
- 07: erster Turbolader
- 08: zweiter Turbolader
- 09: Luftfilter
- 10: -
- 11: Differenzdruckschalter
- 12: erster Luftkühler
- 13: zweiter Luftkühler
- 14: Ansaugregler
- 15: -
- 16: Abblasevorrichtung
- 17: Schraubenkompressor
- 18: Druckbehälter
- 19: Temperatursensor
- 20: -
- 21: Absaugleitung
- 22: Rückschlagventil
- 23: Feinabscheider
- 24: Ölfilter
- 25: -
- 26: Öltemperaturregler
- 27: Ölkühler
- 28: Rückschlagventil
- 29: Drucksensor
- 30: -
- 31: Sicherheitsventil
- 32: Entnahmehähne
- 33: Druckhalteventil
- 34: Druckbegrenzer
- 35: -
- 36: Proportionalregler
- 37: Drucksensor
- 38: Schnellschlussventil
- 39: Bypassventil
- 40: -
- 41: Rückschlagventil
- 42: Entlastungsventil
- 43: Steuerleitung
- 44: -
- 45: -
- 46: -
- 47: -
- 48: -
- 49: -
- 50: -
- 51: erste Kennlinie
- 52: zweite Kennlinie

## Patentansprüche

1. Verfahren zum Steuern des Betriebs einer Gas- oder Luft-Kompressoreinheit, umfassend einen Verbrennungsmotor (01), einen ersten Turbolader (07) zur Erzeugung von verdichteter Luft für den Verbrennungsmotor (01) und einen zweiten Turbolader (08) zur Erzeugung von verdichteter Luft, wobei der erste Turbolader (07) und der zweite Turbolader (08) in einem Abgasstromweg (06) des Verbrennungsmotors (01) angeordnet sind, wobei ein vom zweiten Turbolader (08) mit verdichteter Luft beaufschlagtes Volumen durch Öffnen einer Abblasevorrichtung (16) geöffnet werden kann, und wobei das Verfahren folgende Schritte umfasst:
- Steuern der Abblasevorrichtung (16) über einen Druckregler (36);
- Überwachen eines vom Druckregler (36) bewirkten Steuerdruckes; und
- Ändern des Betriebszustandes, wenn der Steuerdruck im Betriebszustand über einen vorab festgelegten Maximalwert steigt;
wobei die vom ersten Turbolader (07) verdichtete Luft in einen Verbrennungsraum des Verbrennungsmotors (01) geführt wird; und wobei im überwachten Betriebszustand die vom zweiten Turbolader (08) verdichtete Luft zu einem vom Verbrennungsmotor (01) angetriebenen Hauptverdichter (17) geleitet wird, welcher die verdichtete Luft komprimiert; **dadurch gekennzeichnet, dass** es folgende weitere Schritte umfasst:
- Überwachen eines vom ersten Turbolader (07) erzeugten Druckes der verdichteten Luft während eines Betriebszustandes der Kompressoreinheit; und
- Ändern des Betriebszustandes der Kompressoreinheit, wenn der überwachte Druck unter einen vorab festgelegten Wert fällt; wobei der am ersten Turbolader (07) überwachte Druck dann unter den vorab festgelegten Wert fällt, wenn ein vom zweiten Turbolader (08) mit der vorverdichteten Luft beaufschlagtes Volumen infolge eines Fehlers geschlossen ist; und wobei das Ändern des Betriebszustandes weiterhin ein Schließen einer Zuführung (14) von Ansaugluft zum Hauptverdichter (17) umfasst.

2. Verfahren nach Anspruch 1, **dadurch gekennzeichnet, dass** der Schritt des Änderns des Betriebszustands weiterhin ein Ansteuern eines Ansaugreglers (14) umfasst.

3. Verfahren nach Anspruch 1 oder 2, **dadurch gekennzeichnet, dass** der vorab festgelegte Wert abhängig von einer Drehzahl des Verbrennungsmotors (01) ist.

4. Verfahren nach einem der Ansprüche 1 bis 3, **dadurch gekennzeichnet, dass** das Ändern des Betriebszustandes ein Absenken einer Drehzahl des Verbrennungsmotors (01) von einer Betriebsdrehzahl auf eine Leerlaufdrehzahl des Verbrennungsmotors (01) umfasst.

5. Verfahren nach Anspruch 4, **dadurch gekennzeichnet, dass** das Ändern des Betriebszustandes weiterhin ein Abschalten des Verbrennungsmotors (01) umfasst.

6. Verfahren nach einem der Ansprüche 1 bis 5, **dadurch gekennzeichnet, dass** der Abgasstrom (06) des Verbrennungsmotors (01) zuerst den ersten Turbolader (07) und anschließend den zweiten Turbolader (08) durchströmt.

7. Verfahren nach einem der Ansprüche 1 bis 6, **dadurch gekennzeichnet, dass** ein vom zweiten Turbolader (08) erzeugter Druck nicht gemessen wird.

8. Verfahren nach einem der Ansprüche 1 bis 7, **dadurch gekennzeichnet, dass** Messwerte des vom ersten Turbolader (07) erzeugten Druckes Überwachungsdaten darstellen, die an ein übergeordnetes Kompressorleitsystem übertragen werden.

9. Verfahren nach Anspruch 8, **dadurch gekennzeichnet, dass** die Überwachungsdaten eine Ist-Charakteristik bilden, die im übergeordneten Kompressorleitsystem mit einer vordefinierten Soll-Charakteristik verglichen wird.

10. Verfahren nach Anspruch 9, **dadurch gekennzeichnet, dass** das Ändern des Betriebszustandes der Kompressoreinheit dann erfolgt, wenn die Ist-Charakteristik um mehr als einen vordefinierten Wert von der Soll-Charakteristik abweicht.

11. Kompressoreinheit zum Komprimieren von Luft oder Gas, folgende Komponenten umfassend:
- einen Verbrennungsmotor (01);
- einen in einem Abgasstromweg (06) des Verbrennungsmotors (01) angeordneten ersten Turbolader (07), der einen Luftauslass in Strömungsverbindung mit dem Verbrennungsmotor (01) hat, um verdichtete Luft in einen Verbrennungsraum des Verbrennungsmotors (01) zu führen;
- einen im Abgasstromweg (06) des Verbrennungsmotors (01) angeordneten zweiten Turbolader (08) mit einem Luftauslass zur Erzeugung verdichteter Luft, welche zu einem vom Verbrennungsmotor (01) angetriebenen Hauptverdichter (17) geleitet wird, welcher dazu ausgebildet ist, die verdichtete Luft zu komprimieren;
- einen Drucksensor, der an einen Strömungsweg der vom ersten Turbolader (07) erzeugten verdichteten Luft gekoppelt ist;
- eine Abblasevorrichtung (16), durch deren Öffnen ein vom zweiten Turbolader (08) mit verdichteter Luft beaufschlagtes Volumen öffenbar ist; und
- eine an den Drucksensor angeschlossene Ansteuereinheit, die konfiguriert ist, um einen Betriebszustand der Kompressoreinheit zu ändern, wenn der vom Drucksensor überwachte Druck unter einen vorab festgelegten Wert fällt, wenn ein vom zweiten Turbolader (08) mit der vorverdichteten Luft beaufschlagtes Volumen infolge eines Fehlers geschlossen ist, wobei das Ändern des Betriebszustandes weiterhin ein Schließen einer Zuführung (14) von Ansaugluft zum Hauptverdichter (17) umfasst; um die Abblasevorrichtung (16) über einen Druckregler (36) zu steuern; um einen vom Druckregler (36) bewirkten Steuerdruck zu überwachen; und um den Betriebszustand zu ändern, wenn der Steuerdruck im Betriebszustand über einen vorab festgelegten Maximalwert steigt.

## Claims

1. A method for controlling the operation of a gas or air compressor unit, comprising an internal combustion engine (01), a first turbo charger (07) for generating compressed air for the internal combustion engine (01) and a second turbo charger (08) for generating compressed air, wherein the first turbo charger (07) and the second turbo charger (08) are arranged in an exhaust flow path (06) of the internal combustion engine (01), wherein a space into which compressed air has been applied by the second turbo charger (08) can be opened by opening a blow-off device (16), and wherein the method comprises the following steps:
- controlling the blow-off device (16) via a pressure regulator (36);
- monitoring a control pressure effected by the pressure regulator (36); and
- changing the operating state when the control pressure exceeds a previously defined maximum value in said operating state;
wherein the air compressed by the first turbo charger (07) is routed into a combustion chamber of the internal combustion engine (01); and wherein the air compressed by the second turbo charger (08) is routed to a main compressor (17) driven by the internal combustion engine (01) in the monitored operating state, which main compressor further compresses the compressed air; **characterized in that** it comprises the following further steps:
- monitoring the pressure of the compressed air generated by the first turbo charger (07) during an operating state of the compressor unit; and
- changing the operating state of the compressor unit when the monitored control pressure falls below a previously defined value; wherein the pressure monitored at the first turbo charger (07) falls below the previously defined value when a space, into which compressed air has been applied by the second turbo charger (08), is closed due to a failure; and wherein the changing of the operating state furthermore comprises a closing of a supply (14) of intake air to the main compressor (17).

2. The method according to Claim 1, **characterized in that** the step of changing the operating state furthermore comprises a controlling of an intake regulator (14).

3. The method according to Claim 1 or 2, **characterized in that** the previously defined value is dependent on an engine speed of the internal combustion engine (01).

4. The method according to any one of Claims 1 to 3, **characterized in that** the changing of the operating state comprises a lowering of an engine speed of the internal combustion engine (01) from an operating engine speed to an idle engine speed of the internal combustion engine (01).

5. The method according to Claim 4, **characterized in that** the changing of the operating state furthermore comprises shutting down the internal combustion engine (01).

6. The method according to any one of Claims 1 to 5, **characterized in that** the exhaust flow (06) of the internal combustion engine (01) first flows through the first turbo charger (07) and subsequently through the second turbo charger (08).

7. The method according to any one of Claims 1 to 6, **characterized in that** a pressure generated by the second turbo charger (08) is not measured.

8. The method according to any one of Claims 1 to 7, **characterized in that** measurement values of the pressure generated by the first turbo charger (07) represent monitoring data, which are transmitted to a higher-level compressor guidance system.

9. The method according to Claim 8, **characterized in that** the monitoring data form a set of actual characteristics which is compared with a previously defined set of target characteristics in the higher-level compressor guidance system.

10. The method according to Claim 9, **characterized in that** the changing of the operating state of the compressor unit is performed if the set of actual characteristics deviates from the set of target characteristics by more than a previously defined value.

11. A compressor unit for compressing air or gas, comprising the following components:
- an internal combustion engine (01);
- a first turbo charger (07) arranged in an exhaust flow path (06) of the internal combustion engine (01), which first turbo charger has an air outlet connected to the flow to the internal combustion engine (01) for routing compressed air into a combustion chamber of the internal combustion engine (01);
- a second turbo charger (08) arranged in the exhaust flow path (06) of the internal combustion engine (01), said second turbo charger having an air outlet for generating compressed air, which is routed to a main compressor (17) driven by the internal combustion engine (01), which main compressor is designed to further compress the compressed air;
- a pressure sensor, which is coupled to a flow path of the compressed air generated by the first turbo charger (07);
- a blow-off device (16), the opening of which makes it possible to open a space into which compressed air has been applied by the second turbo charger (08); and
- a control unit connected to the pressure sensor, which control unit is configured to change an operating state of the compressor unit when the pressure monitored by the pressure sensor falls below a previously defined value when a space into which compressed air has been applied by the second turbo charger (08) is closed due to a failure, wherein the changing of the operating state furthermore comprises a closing of a supply (14) of intake air to the main compressor (17); to control the blow-off device (16) via a pressure regulator (36); to monitor a control pressure effected by the pressure regulator (36); and to change the operating state when the control pressure exceeds a previously defined maximum value in the operating state.

## Revendications

1. Procédé, destiné à commander le fonctionnement d'un ensemble de compresseurs de gaz ou d'air, comprenant un moteur à combustion interne (01), un premier turbocompresseur (07) destiné à générer de l'air comprimé pour le moteur à combustion interne (01) et un deuxième turbocompresseur (08), destiné à générer de l'air comprimé, le premier turbocompresseur (07) et le deuxième turbocompresseur (08) étant placés dans un trajet de flux de gaz d'échappement (06) du moteur à combustion interne (01), un volume soumis à de l'air comprimé par le deuxième turbocompresseur (08) pouvant être ouvert par ouverture d'un dispositif de décharge (16) et le procédé comprenant les étapes suivantes, consistant à :
- commander le dispositif de décharge (16) par l'intermédiaire d'un régulateur de pression (36) ;
- superviser une pression de commande provoquée par le régulateur de pression (36) ; et
- modifier l'état de fonctionnement lorsqu'en état de fonctionnement, la pression de commande grimpe au-delà d'une valeur maximale précédemment fixée ;
l'air comprimé par le premier turbocompresseur (07) étant dirigé dans un espace de combustion du moteur à combustion interne (01) ; et en état de fonctionnement supervisé, l'air comprimé par le deuxième turbocompresseur (08) étant dirigé vers un compresseur principal (17) entraîné par le moteur à combustion interne (01), lequel comprime l'air comprimé ; **caractérisé en ce qu'**il comporte les étapes additionnelles suivantes, consistant à :
- superviser une pression de l'air comprimé générée par le premier turbocompresseur (07) pendant un état de fonctionnement de l'ensemble de compresseurs ; et
- modifier l'état de fonctionnement de l'ensemble de compresseurs si la pression supervisée chute en-dessous d'une valeur précédemment fixée ; la pression supervisée sur le premier turbocompresseur (07) chutant en-dessous de la valeur précédemment fixée lorsque suite à un défaut, un volume soumis à l'air pré-comprimé par le deuxième turbocompresseur (08) est fermé ; et la modification de l'état de fonctionnement comprenant par ailleurs une fermeture d'une alimentation (14) d'air aspiré vers le compresseur principal (17).

2. Procédé selon la revendication 1, **caractérisé en ce que** l'étape de la modification de l'état de fonctionnement comprend par ailleurs un amorçage d'un régulateur d'aspiration (14).

3. Procédé selon la revendication 1 ou 2, **caractérisé en ce que** la valeur précédemment fixée dépend d'un régime du moteur à combustion interne (01).

4. Procédé selon l'une quelconque des revendications 1 à 3, **caractérisé en ce que** la modification de l'état de fonctionnement comprend un abaissement d'un régime du moteur à combustion interne (01) d'un régime de fonctionnement à un régime de ralenti du moteur à combustion interne (01).

5. Procédé selon la revendication 4, **caractérisé en ce que** la modification de l'état de fonctionnement comprend par ailleurs une mise à l'arrêt du moteur à combustion interne (01).

6. Procédé selon l'une quelconque des revendications 1 à 5, **caractérisé en ce que** le flux de gaz d'échappement (06) du moteur à combustion interne (01) irrigue d'abord le premier turbocompresseur (07) et ensuite le deuxième turbocompresseur (08).

7. Procédé selon l'une quelconque des revendications 1 à 6, **caractérisé en ce qu'**une pression générée par le deuxième turbocompresseur (08) n'est pas mesurée.

8. Procédé selon l'une quelconque des revendications 1 à 7, **caractérisé en ce que** des valeurs de mesure de la pression générée par le premier turbocompresseur (07) représentent des données de supervision, qui sont transmises à un système directeur supérieur du compresseur.

9. Procédé selon la revendication 8, **caractérisé en ce que** les données de supervision créent une caractéristique réelle, qui est comparée dans le système directeur supérieur du compresseur avec une caractéristique de consigne prédéfinie.

10. Procédé selon la revendication 9, **caractérisé en ce que** la modification de l'état de fonctionnement de l'ensemble de compresseurs s'effectue lorsque la caractéristique réelle diverge de plus d'une valeur prédéfinie de la caractéristique de consigne.

11. Ensemble de compresseurs, destiné à comprimer de l'air ou du gaz, comprenant les composants suivants :
- un moteur à combustion interne (01) ;
- un premier turbocompresseur (07) placé dans un trajet de flux de gaz d'échappement (06) du moteur à combustion interne (01), qui dispose d'une sortie d'air en liaison par écoulement avec le moteur à combustion interne (01), pour guider de l'air comprimé dans un espace de combustion du moteur à combustion interne (01) ;
- un deuxième turbocompresseur (08) placé dans le trajet de flux de gaz d'échappement (06) du moteur à combustion interne (01), pourvu d'une sortie d'air pour générer de l'air comprimé, lequel est dirigé vers un compresseur principal (17) entraîné par le moteur à combustion interne (01), lequel est conçu pour comprimer l'air comprimé ;
- un capteur de pression, qui est couplé sur un trajet d'écoulement de l'air comprimé généré par le premier turbocompresseur (07) ;
- un dispositif de décharge (16), par l'ouverture duquel un volume soumis à de l'air comprimé par le deuxième turbocompresseur (08) est susceptible d'être ouvert ; et
- un ensemble d'amorçage raccordé sur le capteur de pression, qui est configuré pour modifier un état de fonctionnement de l'ensemble de compresseurs, lorsque la pression supervisée par le capteur de pression chute en-dessous d'une valeur précédemment fixée, lorsque suite à un défaut, un volume soumis à l'air pré-comprimé par le deuxième turbocompresseur (08) est fermé, la modification de l'état de fonctionnement comprenant par ailleurs une fermeture d'une alimentation (14) d'air aspiré vers le compresseur principal (17) ; pour commander le dispositif de décharge (16) par l'intermédiaire d'un régulateur de pression (36) ; pour superviser une pression de commande provoquée par le régulateur de pression (36) ; et pour modifier l'état de fonctionnement lorsque dans l'état de fonctionnement, la pression de commande monte au-delà d'une valeur maximale précédemment fixée.
